# EUROPÄISCHE PATENTSCHRIFT

(11) **EP 1 955 429 B1**
(45) Veröffentlichungstag und Bekanntmachung des Hinweises auf die Patenterteilung: **06.03.2013**
(21) Anmeldenummer: 06819394.5
(22) Anmeldetag: 10.11.2006
(51) Int. Cl.: H02K 15/06, H02K 15/04, H02K 15/02, H02K 3/24, H02K 3/12

(54) **Verfahren zur Herstellung einer gefalteten Schleifenwickung für einen Ständer**
Manufacturing method for a folded lap winding for a stator
Procédé de fabrication d'un enroulement pour stator

(30) Priorität: 21.11.2005 DE 102005054863
(43) Veröffentlichungstag der Anmeldung: 13.08.2008
(73) Patentinhaber: ROBERT BOSCH GMBH, 70442 Stuttgart (DE)
(72) Erfinder: WOLF, Gert, 71563 Affalterbach (DE); BERGER, Thomas, 71254 Ditzingen (DE)
(86) Internationale Anmeldenummer: PCT/EP2006/068339
(87) Internationale Veröffentlichungsnummer: WO 2007/057355

(56) Entgegenhaltungen:
- EP-A2- 1 122 861
- EP-A2- 1 134 872
- EP-A2- 1 179 880
- US-A1- 2003 015 932

## Beschreibung

Die Erfindung betrifft ein Verfahren zur Herstellung einer Ständerwicklung für einen Ständer einer elektrischen Maschine, insbesondere für ein Kraftfahrzeug, gemäß dem Oberbegriff des Anspruchs 1.

### Stand der Technik

Verfahren zur Herstellung einer Ständerwicklung für einen Ständer einer elektrischen Maschine sind aus dem Stand der Technik bekannt. Dabei werden aus Kostengründen vielfach so genannte ungeordnete Wicklungen hergestellt. Bei dieser Art der Wicklung ist die spätere Position der Leiter lediglich ungefähr vorgebbar, da die Ständerwicklung häufig auf Wickelsterne gewickelt wird und die erzeugten Wickelsterne dann in den Ständer eingezogen werden. Da insbesondere die Anordnung beziehungsweise Form der Leiter im Wickelkopf nur bedingt zu beeinflussen ist, spricht man bei dieser Art von Wicklung auch von "wilden" Wicklungen. Es hat sich jedoch gezeigt, dass ungeordnete Wicklungen im Betrieb ein erhebliches Strömungsgeräusch verursachen und eine gleichmäßige Kühlung der Leiter im Wickelkopf kaum möglich ist. Diese Nachteile können mittels geordneter Wicklungen vermieden werden, da hier die Leiter jeweils definierte Positionen haben. Diese geordneten Wicklungen werden als Steckwicklung hergestellt. Dies ist sehr aufwendig, da die einzelnen U-förmigen Abschnitte der Wicklung, nachdem sie ins Ständerpaket eingefügt wurden, in Position gebogen und anschließend zur elektrischen Kontaktierung geschweißt werden müssen. Eine Möglichkeit, die Herstellung einer geordneten Wicklung zu vereinfachen, wird in der Patentanmeldung US 2004/0119362 A1 für den einfachen Fall einer Einschichtwellenwicklung aufgezeigt.

Aus der EP 1134 872 A2 ist außerdem ein Verfahren zur Herstellung einer Ständerwicklung bekannt, bei welchem parallel zueinander angeordnete Stränge gleichzeitig gebogen werden, sodass sie in der Ebene liegend eine Blitz-Form erhalten. Durch eine Faltung der Stränge aus der Ebene heraus wird ein serpentinenartiger Verlauf der Stränge hergestellt.

### Vorteile der Erfindung

Bei einem Verfahren zur Herstellung einer Ständerwicklung für einen Ständer einer elektrischen Maschine, insbesondere für ein Kraftfahrzeug, wird erfindungsgemäß vorgeschlagen, dass gemäß den Merkmalen des Anspruchs 1 der mindestens eine Strang der Ständerwicklung in einer Ebene positioniert wird und dass Bereiche des Strangs entlang mindestens einer Faltlinie aufeinander zu gebogen werden, sodass sich eine Schleifenwicklung ergibt. Die Besonderheit des Verfahrens liegt darin, dass zunächst der Strang in einer Ebene positioniert wird. Darunter ist im Wesentlichen zu verstehen, dass der Strang in der Ebene angeordnet, ausgelegt und/oder geformt oder auf andere Weise hergestellt wird. Es wird also der Verlauf des Strangs innerhalb dieser Ebene gebildet. Durch das Positionieren bildet der

Strang in der Draufsicht einen bestimmten Weg innerhalb der Ebene. Innerhalb der Ebene wird mindestens eine Faltlinie, meistens mehrere Faltlinien, die insbesondere parallel zueinander angeordnet sind, definiert. Entlang dieser mindestens einen Faltlinie werden dann Bereiche des Strangs aufeinander zu gebogen. Die Topologie des Strangs in der Ebene wurde dabei so gewählt, dass sich nach dem Biegen des Strangs eine Schleifenwicklung ergibt. Ausgangspunkt ist also eine flache Wicklung, wobei der Strang im flachen Zustand besonders einfach an jeder gewünschten Position gekröpft und/oder verprägt werden kann. Im fertigen Zustand bildet der Strang dann eine mindestens zweischichtige Struktur, die die Ständerwicklung für die elektrische Maschine darstellt. Da ein Strang (für eine Phase) einzeln hergestellt werden kann, bedeutet dies für eine elektrische Maschine mit mehreren Phasen, dass diese separat hergestellt werden können. Ein weiterer Vorteil liegt darin, dass es sich um eine mehrschichtige Grundstruktur handelt, das heißt zur Erzielung des fertigen Zustands werden deutlich weniger Kröpfungen benötigt als dies bei einer einschichtigen Lösung der Fall ist. Eine bevorzugte Variante zur Durchführung dieses Verfahrens sieht die folgenden Arbeitsschritte vor:
1. Herstellen/Positionieren des flachen Strangs
2. Soweit erforderlich, Verprägen/Kröpfen des Strangs an den erforderlichen Stellen
3. Falten des Strangs entlang der mindestens einen Faltlinie.

Die weitere Verarbeitung einer derartig hergestellten Ständerwicklung ist außerdem besonders einfach. Es sind lediglich die folgenden Schritte erforderlich:
1. Einlegen der Wicklung in das Ständerpaket
2. Soweit erforderlich, Biegen des Ständerpakets
3. Soweit erforderlich, Formen des Wickelkopfes.

Auf diese Weise lässt sich sehr kostengünstig eine geordnete Schleifenwicklung herstellen.

Vorteilhafterweise kommt im gefalteten Zustand mindestens ein erster Strangabschnitt parallel zu einem zweiten Strangabschnitt zu liegen. Derartig zueinander orientierte Strangabschnitte lassen sich später besonders einfach in die Nuten des Ständerpakets einlegen. Ein Strangabschnitt ist dabei als ein Abschnitt entlang der Erstreckung des Strangs zu verstehen. Die Definition eines solchen Strangabschnitts kann dabei rein virtuell sein, das heißt, sie ist nicht an bestimmte physikalische Ausprägungen oder gar an eine Unterbrechung des Strangs gebunden. Häufig wird der Beginn beziehungsweise das Ende eines Strangabschnitts aber damit verbunden sein, dass der Verlauf des Strangs innerhalb der Ebene einen Richtungswechsel erfährt, beispielsweise einen Knick macht.

Es ist bevorzugt, dass die Positionierung eines Strangabschnitts des Strangs in einer ersten Richtung der Ebene mit einer Nutzahl einer späteren Nutposition des Strangabschnitts korrespondiert und dass die Positionierung eines Strangabschnitts in einer zur ersten Richtung senkrechten, zweiten Richtung der Ebene mit einer radialen Position des Strangabschnitts innerhalb einer Nut korrespondiert. Eine derartige Konvention erleichtert sowohl das Verständnis als auch die Realisierung der zur Erzielung einer bestimmten Schleifenwicklung erforderlichen Topologie des Strangs. Es wird dann besonders einfach, Topologien des Strangs zu definieren, existierende Topologien zu interpretieren und gewünschte Änderungen umzusetzen. Das Arbeiten nach diesem Prinzip wird anhand der noch folgenden Ausführungsbeispiele näher erläutert.

Erfindungsgemäß erfolgt die Positionierung des Strangs in der ersten Richtung serpentinenförmig und in der zweiten Richtung wellenförmig. Die serpentinenförmige Struktur stellt sicher, dass die zur Verfügung stehende Ebene bestmöglich genutzt wird. Die wellenförmige Positionierung in der zweiten Richtung stellt eine günstige Möglichkeit dar, die Schleifenwicklung beim Falten des Strangs zu erzielen.

Mit Vorteil sind innerhalb der Ebene Bereiche definiert, die eine Zuordnung von Strangabschnitten zu mindestens einem Wickelkopf oder zu einem Ständerpaket ermöglichen. Dies bedeutet, dass sich durch die Wahl der Topologie des Strangs festlegen lässt, welche Strangabschnitte nach der Herstellung der Ständerwicklung in den Nuten des Ständerpakets liegen werden und welche Strangabschnitte den mindestens einen Wickelkopf bilden werden.

Gemäß einer Weiterbildung der Erfindung sind in den Bereichen, die einem Wickelkopf zuordenbar sind, der Verlauf eines Strangabschnitts schräg zur ersten und zur zweiten Richtung. Die technische Wirkung dieses Vorgehens lässt sich bei Betrachtung der fertigen Ständerwicklung leicht erkennen. So führt ein entsprechender Verlauf des Strangs einerseits dazu, dass der Strang in einer anderen Nut weitergeführt wird und andererseits, dass sich die radiale Position des Strangs innerhalb der Nut gegenüber der vorherigen Position ändert. Ein derartiger Strangabschnitt wird in der Regel die Faltlinie kreuzen, da sich dann die Änderung der radialen Position besonders einfach bewirken lässt.

Es ist ferner bevorzugt, dass in den Bereichen, die einem Ständerpaket zuordenbar sind, der Verlauf eines Strangabschnitts parallel zur zweiten Richtung ist.

Vorteilhafterweise werden zur Herstellung der Ständerwicklung mehrere Stränge verwendet, die überwiegend parallel geführt werden. Die Herstellung einer solchen mehrphasigen Ständerwicklung ist durch wiederholte Anwendung des zuvor beschriebenen Verfahrens sehr einfach zu realisieren. Dazu können vor dem Falten der Wicklung einfach mehrere Stränge hergestellt und in einem Magazin abgelegt werden. Sobald die benötigte Strangzahl im Magazin erreicht ist, wird dann der Strang zur Ständerwicklung gefaltet.

Bevorzugt ist die Positionierung der Stränge als verteilte Wicklung ausgeführt. Auf diese Weise werden die Kreuzungen einzelner Stränge räumlich entzerrt und dadurch der Umgang mit den Kreuzungen vereinfacht.

Gemäß einer Weiterbildung der Erfindung führt ein Ende eines einem Wickelkopf zuordenbaren Strangabschnitts in eine andere radiale Lage innerhalb einer Nut als das andere Ende dieses Strangabschnitts. Dadurch lässt sich die mindestens zweischichtige Struktur der fertigen Ständerwicklung bereits aus der Topologie der Stränge in der Ebene ableiten.

Mit Vorteil ist die Anzahl der die Faltlinie überquerenden Strangabschnitte gleich der Anzahl der Nuten des zugeordneten Ständerpakets. Somit sind jeder Nut des Ständerpakets mindestens ein Strangabschnitt zugeordnet.

Außerdem ist es vorteilhaft, dass sich für die gefaltete Ständerwicklung die Lage der Strangabschnitte innerhalb der Nuten radial fortschreitend ändert, wobei an mindestens einem Umkehrpunkt die Richtung des radialen Fortschreitens umgekehrt wird. Dadurch ergibt sich eine besonders gut strukturierte Realisierung des mehrschichtigen Aufbaus.

Es ist besonders bevorzugt, für den Strang einen durchgehenden Draht zu verwenden. Zwar ist es grundsätzlich möglich, den Strang auch aus mehreren Elementen zu bilden, die dann elektrisch miteinander verbunden werden, doch liegt die Besonderheit der Erfindung gerade darin, dass ein durchgehender Draht verwendet werden kann. Dies vereinfacht die Herstellung und reduziert die Fertigungskosten.

Gemäß einer Weiterbildung der Erfindung wird für den Strang ein Rechteckdraht verwendet. Dadurch lassen sich besonders hohe Ständerfüllfaktoren erzielen. Es kann aber auch die mit Runddraht hergestellte Wicklung nach Herstellung im Nutbereich verprägt werden. Dies führt zu einem hohen Kupferfüllfaktor.

Vorteilhafterweise entspricht der Durchmesser des den Strang bildenden Leiters im Wesentlichen der Nutbreite der Nuten im Ständerpaket oder ist größer als die Nutbreite. Dadurch wird einerseits ein Verrutschen des Leiters innerhalb der Nuten reduziert oder verhindert. Andererseits kann die Ständerwicklung als Einlegewicklung für ein "Open Slot"-Ständerpaket verwendet werden (Definition Open Slot = Ständerzähne ohne Zahnkopf und ferner Fügen der Wicklung in rundes Ständerpaket von innen).

Bevorzugt wird die Ständerwicklung in ein Flachpaket eingelegt. Dies vereinfacht insgesamt die Herstellung der elektrischen Maschine.

Gemäß einer bevorzugten Weiterbildung der Erfindung variieren die Längen der außerhalb des Ständerpakets liegenden Strangabschnitte, insbesondere um eine konstante Wickelkopfhöhe zu erzeugen.

Gemäß einer weiteren Variante ragt eine Schicht der in einer Nut aufgeschichteten Strangabschnitte deutlich über die anderen Schichten zur Erfüllung einer Kühlfunktion hinaus, wobei diese Schicht insbesondere zum Ständerinnendurchmesser geneigt ist. Auf diese Weise wird die äußerste Schicht besonders gut umströmt und gekühlt.

Die Erfindung betrifft ferner eine Ständerwicklung für den Ständer einer elektrischen Maschine, insbesondere für ein Kraftfahrzeug, wobei die Ständerwicklung als zumindest zweischichtige nach einem der zuvor beschriebenen Verfahren hergestellte Schleifenwicklung ausgeführt ist. Dabei weist die Ständerwicklung vorteilhafterweise Merkmale auf, die sich bei Anwendung eines zuvor beschriebenen Verfahrens erzielen lassen.

Schließlich betrifft die Erfindung eine elektrische Maschine, insbesondere für ein Kraftfahrzeug, wobei eine Ständerwicklung der Maschine als zumindest zweischichtige, nach einem der zuvor beschriebenen Verfahren hergestellte Schleifenwicklung ausgeführt ist.

### Zeichnungen

Die Erfindung wird nun anhand von Zeichnungen näher erläutert. Es zeigen
- Figur 1: eine flache Wicklung mit sechs Phasen, fünf Leitern pro Nut und sechsundneunzig Nuten,
- Figur 2: eine flache Wicklung mit sechs Phasen, vier Leitern pro Nut und sechsundneunzig Nuten,
- Figur 3: eine flache Wicklung mit sechs Phasen, fünf Leitern pro Nut und sechsundneunzig Nuten in der Ausführung als verteilte Wicklung,
- Figur 4: eine flache Wicklung mit drei Phasen, fünf Leitern pro Nut und achtundvierzig Nuten,
- Figur 5: ein Zwischenschnitt in der Herstellung einer sechsphasigen Ständerwicklung,
- Figur 6: ein Ausführungsbeispiel einer fertig gefalteten Ständerwicklung,
- Figur 7: verschiedene Varianten der Faltung, und
- Figur 8: die symbolische Darstellung des Unterschieds zwischen einer wellförmigen und einer serpentinenförmigen Struktur.

### Beschreibung der Ausführungsbeispiele

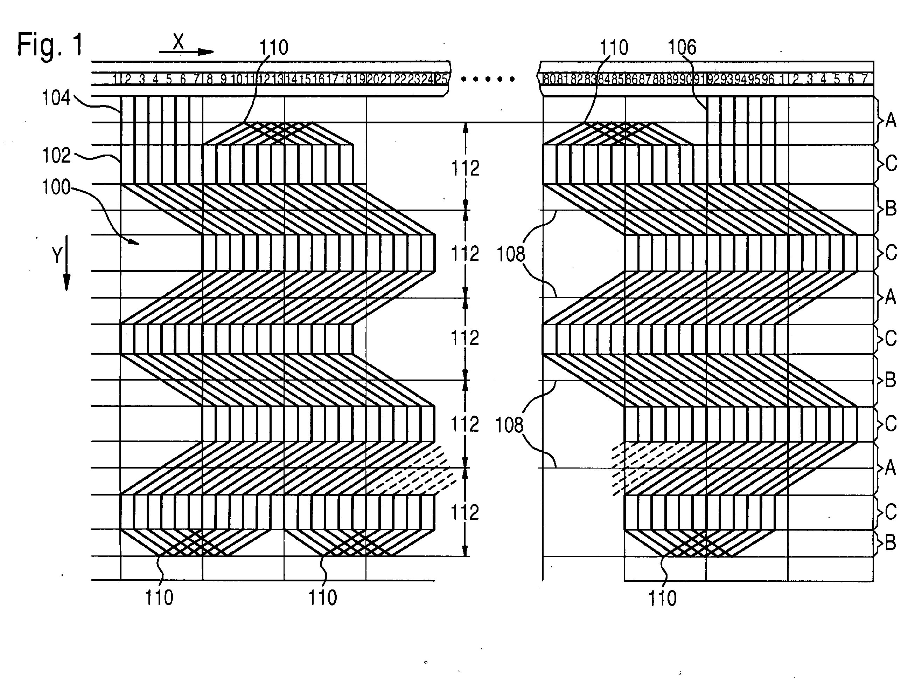

Figur 1 zeigt ein erstes Ausführungsbeispiel einer flachen Wicklung. Es handelt sich hierbei um eine Ständerwicklung 100 mit sechs Phasen, fünf Leitern pro Nut und sechsundneunzig Nuten, wobei die Ständerwicklung 100 hier im ungefalteten Zustand dargestellt ist. Um die Darstellung auf das Wesentliche zu beschränken, wurde der Bereich zwischen den Nuten 19 bis 84 lediglich teilweise dargestellt. Wie in den dargestellten Teilen setzt sich die Wicklung genauso in dem nicht dargestellten Teil fort. Die Ständerwicklung 100 ist aus sechs Strängen gebildet, wobei hier lediglich auf den ersten Strang 102, der mit einem Stranganfang 104 in der Nut 1 beginnt, eingegangen wird. Für die weiteren Stränge, die in den Nuten 2 bis 6 beginnen, gelten diese Ausführungen entsprechend. Der Strang 102 endet am Strangende 106 in der Nut 91. Es sind ferner vier Faltlinien 108 zu erkennen, die sich über alle Nuten hinweg erstrecken. Die gesamte Ständerwicklung 100 erstreckt sich in einer XY-Ebene mit einer ersten Richtung X und einer zweiten Richtung Y. In der X-Richtung sind die Nuten mit ihren Ordnungszahlen in aufsteigender Reihenfolge abgetragen. In Y-Richtung sind die Stränge einschließlich des ersten Strangs 102 in mehrere Bereiche unterteilt. Dabei ist mit A jeweils ein Bereich der Ständerwicklung 100 dargestellt, der im fertig gefalteten Zustand auf der A-Seite des Ständerpakets (Anschlussseite) liegen wird und dort einen ersten Wickelkopf ausbildet. Mit B wird der zweite Wickelkopf bezeichnet, der dem ersten Wickelkopf gegenüber auf der so genannte B-Seite liegt. Die Bereiche kopf gegenüber auf der so genannte B-Seite liegt. Die Bereiche des Strangs, die später in den Nuten des Ständerpakets zu liegen kommen, sind mit C bezeichnet.

Es soll nun der Verlauf des ersten Strangs 102 dargelegt werden, wobei auch auf die spätere Position der Ständerwicklung 100 im Ständerpaket eingegangen wird. Beginnend beim Stranganfang 104 liegt der Strang 102 zunächst auf der A-Seite und wird durch das Ständerpaket (Bereich C) zur B-Seite geführt. Es sei dabei angenommen, dass der Strang dabei im Innersten der Nut, also am nächsten zum Zentrum des Ständers, zu liegen kommen wird. Nachdem der Strang 102 aus dem Ständereisen auf der B-Seite austritt, überschreitet er eine Faltlinie 108 und wird zur Nut 7 geführt. Neben dem offensichtlichen Nutwechsel wird durch das Überqueren der Faltlinie 108 bewirkt, dass der Strang 102 nunmehr in einer anderen radialen Lage innerhalb der Nut 7 weitergeführt wird als dies in der Nut 1 der Fall ist. Bei einer Zählweise beginnend vom Innersten der Nut wechselt der Strang 102 also von einer ersten Schicht in eine zweite Schicht. Nach diesem Wechsel wird der Strang 102 in der Nut 7 durch das Ständereisen (Bereich C) geführt. Auf der A-Seite wird der Strang 102 wieder von der Nut 7 zur Nut 1 zurückgeführt, wobei er wieder seine radiale Lage innerhalb der Nut ändert. Der Strang wird nunmehr in einer dritten Schicht weitergeführt. Der Strang 102 wird wieder durch das Ständerpaket geführt, wechselt auf der B-Seite erneut die Nut und die radiale Position, durchquert erneut das Ständereisen, wechselt erneut von der Nut 7 zur Nut 1 und durchquert erneut das Ständereisen, nunmehr in der fünften Schicht. Wieder auf der B-Seite angelangt, wird der Strang 102 zu einem Umkehrpunkt 110 geführt. Der Umkehrpunkt 110 ist dabei im Hinblick auf die Y-Richtung zu verstehen. Vom Umkehrpunkt 110 wird der Strang 102 nunmehr wieder zurückgeführt, wobei er alternierend die Nuten 7 und 13 verwendet. Bei radialer Betrachtungsweise wandert der Strang 102 zurück von der fünften Schicht bis zur ersten Schicht. Hier kehrt sich die radiale Bewegungsrichtung am Umkehrpunkt 110 erneut um und setzt sich schließlich solange fort, bis der Strang 102 am Strangende 106 in der Nut 91 endet.

Da es beim Positionieren der folgenden Stränge in der Nähe der Umkehrpunkte 110 zu Berührungen der Stränge untereinander kommen würde, wird nun der Strang 102 in der Nähe seines Umkehrpunkts 110 gekröpft. Dies bedeutet, dass der vom Umkehrpunkt 110 wegführende Strangabschnitt in diesem Fall etwas tiefer in der XY-Ebene liegt, als der zum Umkehrpunkt 110 führende Strangabschnitt. Dadurch können die nachfolgenden Stränge über den vom Umkehrpunkt 110 wegführenden Strangabschnitt geführt werden. Nachdem der Strang 102 dementsprechend in der XY-Ebene positioniert ist, werden die nachfolgenden fünf Stränge nach dem gleichen Prinzip positioniert. Es ergibt sich schließlich die in der Figur 1 dargestellte Topologie.

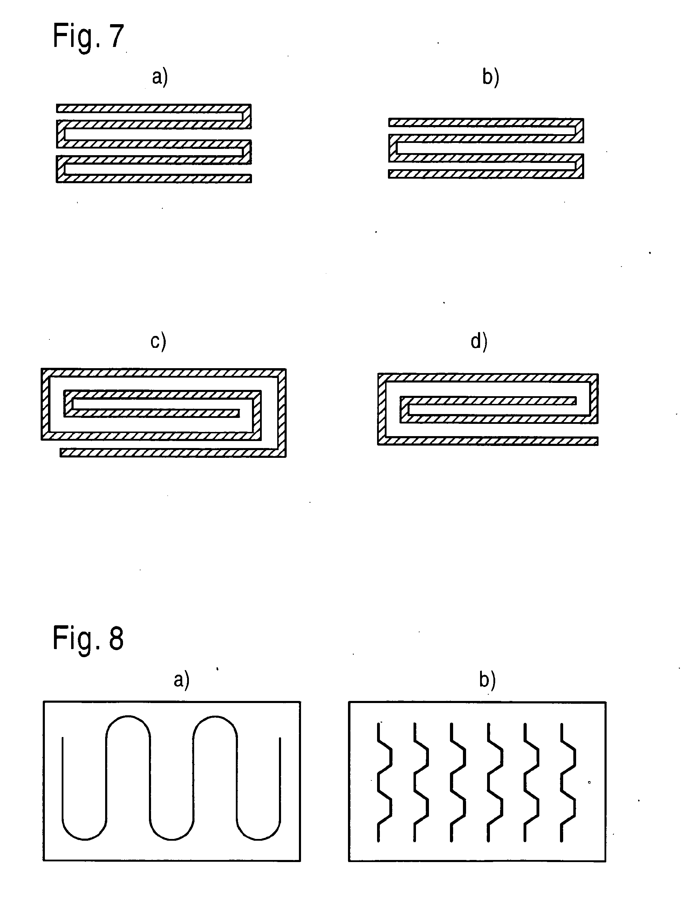

Im nächsten Schritt werden die Stränge entlang der Faltlinien 108 gefaltet. In diesem Fall werden die Strangbereiche 112 ähnlich einer Ziehharmonika aufeinander zu gefaltet (siehe Figur 7a). Grundsätzlich können aber auch andere Falttechniken verwendet werden(siehe beispielsweise Figur 7, c)). Das Entstehen der Schleifen der Ständerwicklung 100 lässt sich besonders leicht nachvollziehen, wenn man die Topologie der Stränge auf einer durchsichtigen Folie abbildet und dann entlang der Faltlinien 108 faltet. In der Draufsicht sind dann die Schleifen, die beispielsweise durch die Nuten 1 und 7 geführt werden, deutlich zu erkennen. Es wird dabei auch deutlich, dass die Strangabschnitte in den Bereichen C parallel zueinander zu liegen kommen. Strangabschnitte, die dann übereinander liegen, werden im Ständerpaket in dieselbe Nut gelegt.

Bei Betrachtung der Topologie ist zu erkennen, dass die Positionierung der Stränge in der ersten Richtung serpentinenförmig und in der zweiten Richtung wellenförmig ist. Die Stränge werden parallel geführt, bis auf den Bereich der Umkehrpunkte 110, wo Überkreuzungen zwingend erfolgen.

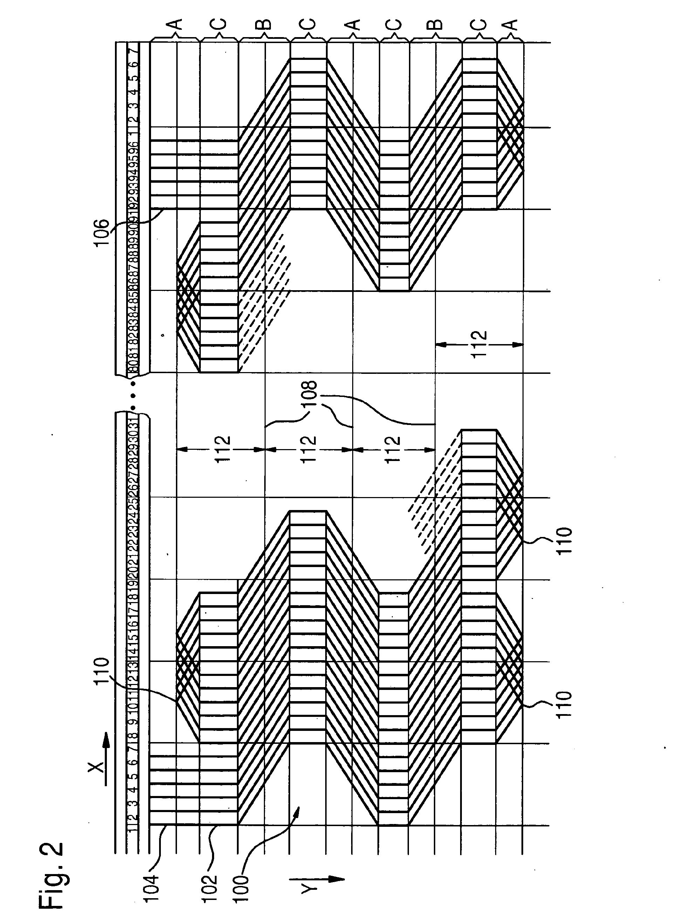

Figur 2 zeigt ein weiteres Ausführungsbeispiel einer flachen Wicklung, hier mit sechs Phasen, vier Leitern pro Nut und sechsundneunzig Nuten. Zur Erläuterung der Figur 2 wird auf die Ausführungen der Figur 1 verwiesen, die im Wesentlichen auch hier anwendbar sind. Im Vergleich zur Figur 1, die die Ausführung der Erfindung für eine ungerade Anzahl an Leitern pro Nut aufgezeigt hat, zeigt die Figur 2 nun die Ausführung für eine gerade Anzahl an Leitern pro Nut auf.

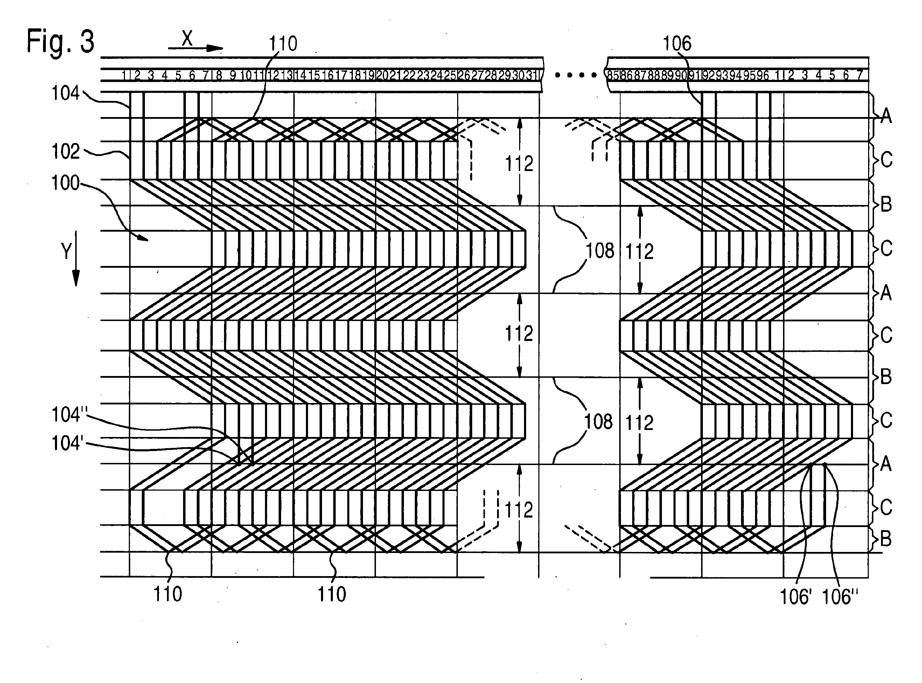

Figur 3 zeigt ein weiteres Ausführungsbeispiel einer flachen Wicklung auf für sechs Phasen, fünf Leitern pro Nut und sechsundneunzig Nuten in der Ausführungsform als verteilte Wicklung. Der Begriff der verteilten Wicklung ist dabei dahingehend zu verstehen, dass die Umkehrpunkte 110 nun räumlich entzerrt sind. Dies ist besonders gut im Vergleich zur Figur 1 zu erkennen. In der Figur 1 liegen jeweils sechs Umkehrpunkte 110 dicht beieinander, wobei die einzelnen Gruppen von jeweils sechs Umkehrpunkten 110 einen deutlichen Abstand zueinander aufweisen. Im Vergleich dazu bilden in der Figur 3 jeweils zwei Umkehrpunkte 110 gewissermaßen eine Gruppe und sind diese Gruppen jeweils durch einen Abstand voneinander entfernt. Durch die räumliche Entzerrung können Vereinfachungen im Herstellungsprozess erzielt werden. Ferner kommt es zu dem Vorteil eines geringen Strömungsgeräusches durch die regelmäßige Form. Für die Erläuterung zu Figur 3 wird auf die Erläuterung zu Figur 1 verwiesen, die sich hier sinngemäß anwenden lassen. Es sei dabei lediglich auf die besondere Positionierung der Stranganfänge 104', 104" und der Strangenden 106', 106" des dritten und vierten Strangs hingewiesen.

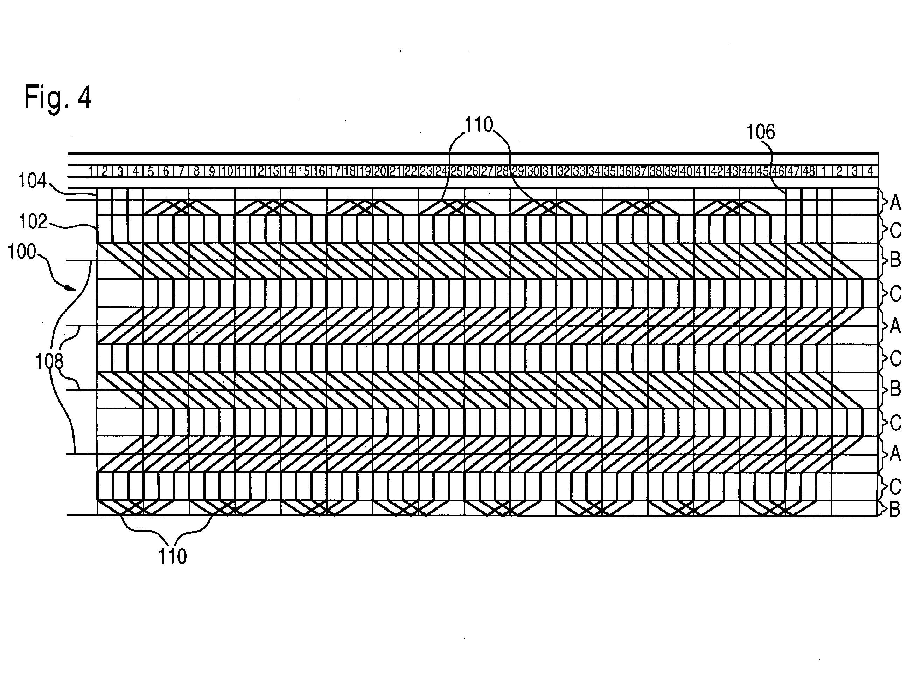

Ein weiteres Ausführungsbeispiel ist in der Figur 4 dargestellt, wobei es sich um eine flache Wicklung mit drei Phasen, fünf Leitern pro Nut und achtundvierzig Nuten handelt. Für die Erläuterungen der Figur 4 sei auf die Erläuterungen der Figur 1 verwiesen, die hier sinngemäß anzuwenden sind. Auch dieses Ausführungsbeispiel ist ein Beleg dafür, dass sich die Erfindung sehr flexibel einsetzen lässt.

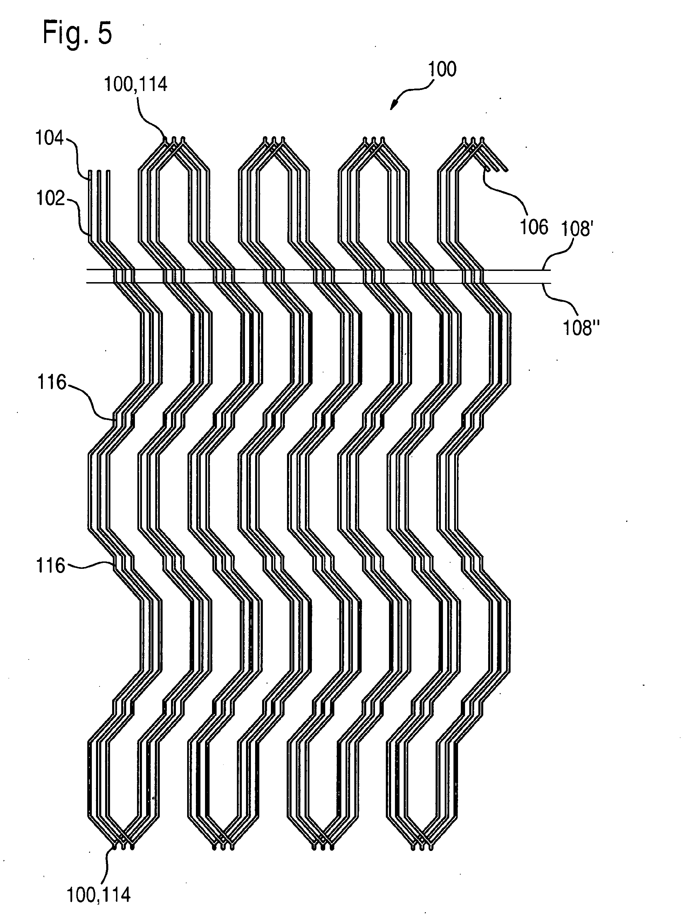

Figur 5 geht nun von den allgemeinen Erläuterungen zur Erfindung auf eine konkrete Ausgestaltung der Stränge über. Es sind dabei drei Stränge von einer Ständerwicklung 100 dargestellt, die im fertigen Zustand dann sechsphasig ausgeführt sein wird. Den Strängen liegt dabei die in der Figur 1 aufgezeigte Topologie zugrunde. Zur weiteren Erläuterung soll dabei auch hier lediglich auf den ersten Strang 102 eingegangen werden. In der konkreten Ausgestaltung ist nun zu erkennen, dass der erste Strang an seinen Umkehrpunkten 110 jeweils eine Kröpfung 114 oder mehrere Kröpfungen 114 aufweist. Es ist daher möglich, die einzelnen Stränge parallel zueinander anzuordnen, ohne dass eine Berührung erfolgt. Ferner wird mittels Zwischenstücken 116 sichergestellt, dass die Strangführung im Wickelkopf wohldefiniert und ohne Berührungen ausgeführt werden kann. Dafür kommen hier zwischen den Schichten jeweils zwei Faltlinien 108' und 108" zum Einsatz.

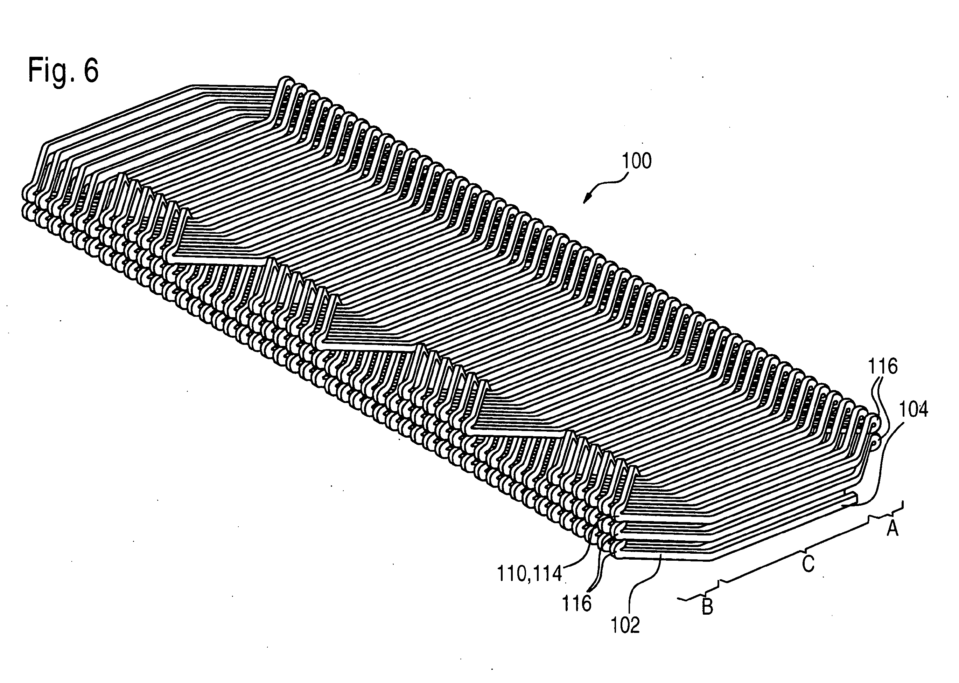

In der Figur 6 ist schließlich eine fertig gefaltete sechsphasige Ständerwicklung 100 mit allen sechs Strängen dargestellt. Es sind dabei deutlich die Wechsel in die einzelnen Schichten und die Behandlung der Überkreuzungen an den Umkehrpunkten 110 zu erkennen. Die Ständerwicklung 10 kann unmittelbar als eine Flachwicklung zum Einlegen in ein flaches Ständerpaket, das später rund gebogen wird, oder als "Open Slot"-Wicklung, die von einem Innendorn von innen in ein rundes Paket eingebracht wird, verwendet werden.

Figur 7 zeigt verschiedene Möglichkeiten auf, die in der Ebene ausgelegten Stränge zu falten. Dabei ist bei a) eine fünfschichtige Anordnung für fünf Leiter pro Nut dargestellt. Die Faltung wurde dabei ähnlich einer Ziehharmonika vorgenommen. Unter b) ist die gleiche Falttechnik gezeigt für eine vierschichtige Anordnung. Im Teil c) wird gezeigt, dass die Faltung der einzelnen Schichten auch umeinander herum erfolgen kann, sich also gewissermaßen eine Spirale ergibt. Schließlich ist bei d) die gleiche Falttechnik für eine vierschichtige Anordnung dargestellt.

Schließlich wird in der Figur 8 symbolisch die Bedeutung von serpentinenförmig und wellenförmig dargestellt. Im Bereich a) ist die serpentinenförmige Positionierung von einem oder mehrerer Stränge in der ersten Richtung X gezeigt. Im Vergleich dazu ist im Bereich b) die wellenförmige Positionierung in der zweiten Richtung Y aufgezeigt. Im Ergebnis überlagern sich diese Strukturen gewissermaßen, so dass sich die zuvor erläuterten Ausführungsbeispiele ergeben können.

## Patentansprüche

1. Verfahren zur Herstellung einer Ständerwicklung (100) für einen Ständer einer elektrischen Maschine, insbesondere für ein Kraftfahrzeug, wobei der mindestens eine Strang (102) der Ständerwicklung (100) in einer Ebene positioniert wird und Bereiche des Stranges (A, B, C) entlang mindestens einer Faltlinie (108) aufeinander zu gebogen werden, so dass sich eine Schleifenwicklung ergibt, wobei die Positionierung des Strangs (102) in einer ersten Richtung (X) serpentinenförmig und in einer zweiten Richtung (Y) wellenförmig erfolgt.

2. Verfahren nach Anspruch 1, **dadurch gekennzeichnet, dass** im gefalteten Zustand mindestens ein erster Strangabschnitt parallel zu einem zweiten Strangabschnitt zu liegen kommt.

3. Verfahren nach einem der vorhergehenden Ansprüche, **dadurch gekennzeichnet, dass** die Positionierung eines Strangabschnitts des Strangs (102) in einer ersten Richtung (X) der Ebene mit einer Nutzahl einer späteren Nutposition des Strangabschnitts korrespondiert und dass die Positionierung eines Strangabschnitts in einer zur ersten Richtung senkrechten, zweiten Richtung (Y) der Ebene mit einer radialen Position des Strangabschnitts innerhalb einer Nut korrespondiert.

4. Verfahren nach einem der vorhergehenden Ansprüche, **dadurch gekennzeichnet, dass** innerhalb der Ebene Bereiche (A,B,C) definiert sind, die eine Zuordnung von Strangabschnitten zu mindestens einem Wickelkopf oder zu einem Ständerpaket ermöglichen.

5. Verfahren nach einem der vorhergehenden Ansprüche, **dadurch gekennzeichnet, dass** in den Bereichen (A,B), die einem Wickelkopf zuordenbar sind, der Verlauf eines Strangabschnitts schräg zur ersten und zur zweiten Richtung (X,Y) ist.

6. Verfahren nach einem der vorhergehenden Ansprüche, **dadurch gekennzeichnet, dass** in den Bereichen (C), die einem Ständerpaket zuordenbar sind, der Verlauf eines Strangabschnitts parallel zur zweiten Richtung (Y) ist.

7. Verfahren nach einem der vorhergehenden Ansprüche, **dadurch gekennzeichnet, dass** zur Herstellung der Ständerwicklung (100) mehrere Stränge verwendet werden, die überwiegend parallel geführt werden.

8. Verfahren nach einem der vorhergehenden Ansprüche, **dadurch gekennzeichnet, dass** die Positionierung der Stränge als verteilte Wicklung ausgeführt ist.

9. Verfahren nach einem der vorhergehenden Ansprüche, **dadurch gekennzeichnet, dass** ein Ende eines einem Wickelkopf zuordenbaren Strangabschnitts in eine andere radiale Lage innerhalb einer Nut führt als das andere Ende dieses Strangabschnitts.

10. Verfahren nach einem der vorhergehenden Ansprüche, **dadurch gekennzeichnet, dass** die Anzahl der die Faltlinie (108) überquerenden Strangabschnitte gleich der Anzahl der Nuten des zugeordneten Ständerpakets ist.

11. Verfahren nach einem der vorhergehenden Ansprüche, **dadurch gekennzeichnet, dass** sich für die gefaltete Ständerwicklung (100) die Lage der Strangabschnitte innerhalb der Nuten radial fortschreitend ändert, wobei an mindestens einem Umkehrpunkt (110) die Richtung des radialen Fortschreitens umgekehrt wird.

12. Verfahren nach einem der vorhergehenden Ansprüche, **dadurch gekennzeichnet, dass** für den Strang (102) ein durchgehender Draht verwendet wird.

13. Verfahren nach einem der vorhergehenden Ansprüche, **dadurch gekennzeichnet, dass** für den Strang (102) ein Rechteckdraht verwendet wird.

14. Verfahren nach einem der vorhergehenden Ansprüche, **dadurch gekennzeichnet, dass** der Durchmesser des den Strang (102) bildenden Leiters im Wesentlichen der Nutbreite der Nuten im Ständerpaket entspricht oder größer als die Nutbreite ist.

15. Verfahren nach einem der vorhergehenden Ansprüche, **dadurch gekennzeichnet, dass** die Form des Leiters im flachen oder gefalteten Zustand insbesondere durch Prägen geändert wird.

16. Verfahren nach einem der vorhergehenden Ansprüche, **dadurch gekennzeichnet, dass** die in den Nuten liegenden Abschnitte des Leiters in Nutform verprägt werden.

17. Verfahren nach einem der vorhergehenden Ansprüche, **dadurch gekennzeichnet, dass** die Ständerwicklung (100) in ein Flachpaket eingelegt wird.

18. Verfahren nach einem der vorhergehenden Ansprüche, **dadurch gekennzeichnet, dass** die Längen der außerhalb des Ständerpakets liegenden Strangabschnitte variieren, insbesondere um eine konstante Wickelkopfhöhe zu erzeugen.

19. Verfahren nach einem der vorhergehenden Ansprüche, **dadurch gekennzeichnet, dass** eine Schicht der in einer Nut aufgeschichteten Strangabschnitte deutlich über die anderen Schichten zur Erfüllung einer Kühlfunktion hinausragt, wobei diese Schicht insbesondere zum Ständerinnendurchmesser geneigt ist.

20. Verfahren nach einem der vorhergehenden Ansprüche, **dadurch gekennzeichnet, dass** im Bereich des Wickelkopfes an den Umkehrpunkten oder neben den Umkehrpunkten eine oder mehrere Kröpfungen angebracht sind.

## Claims

1. Method for producing a stator winding (100) for a stator of an electrical machine, in particular for a motor vehicle, wherein the at least one strand (102) of the stator winding (100) is positioned in one plane and regions of the strand (A, B, C) are bent towards one another along at least one folding line (108), with the result that a lap winding is produced, wherein the strand (102) is positioned in a serpentine manner in a first direction (X) and in a wave-like manner in a second direction (Y).

2. Method according to Claim 1, **characterized in that** at least a first strand section comes to rest parallel to a second strand section in the folded state.

3. Method according to either of the preceding claims, **characterized in that** the positioning of a strand section of the strand (102) in a first direction (X) of the plane corresponds to a number of slots of a subsequent slot position of the strand section, and **in that** the positioning of a strand section in a second direction (Y) of the plane, which second direction is perpendicular to the first direction, corresponds to a radial position of the strand section within one slot.

4. Method according to one of the preceding claims, **characterized in that** regions (A, B, C) which allow strand sections to be associated with at least one winding head or with a stator core are defined within the plane.

5. Method according to one of the preceding claims, **characterized in that** the profile of a strand section is oblique to the first and to the second direction (X, Y) in the regions (A, B) which can be associated with a winding head.

6. Method according to one of the preceding claims, **characterized in that** the profile of a strand section is parallel to the second direction (Y) in the regions (C) which can be associated with a stator core.

7. Method according to one of the preceding claims, **characterized in that** a plurality of strands which are routed predominantly parallel are used to produce the stator winding (100).

8. Method according to one of the preceding claims, **characterized in that** the positioning of the strands is designed as a distributed winding.

9. Method according to one of the preceding claims, **characterized in that** one end of a strand section which can be associated with a winding head is routed into a different radial position within a slot than the other end of the said strand section.

10. Method according to one of the preceding claims, **characterized in that** the number of strand sections which cross over the folding line (108) is equal to the number of slots in the associated stator core.

11. Method according to one of the preceding claims, **characterized in that** the position of the strand sections within the slots changes in a radially progressing manner for the folded stator winding (100), wherein the direction of the radial progression is reversed at at least one reversal point (110).

12. Method according to one of the preceding claims, **characterized in that** a continuous wire is used for the strand (102).

13. Method according to one of the preceding claims, **characterized in that** a rectangular wire is used for the strand (102).

14. Method according to one of the preceding claims, **characterized in that** the diameter of the conductor which forms the strand (102) corresponds substantially to the slot width of the slots in the stator core or is larger than the slot width.

15. Method according to one of the preceding claims, **characterized in that** the shape of the conductor in the flat or folded state is changed, in particular, by stamping.

16. Method according to one of the preceding claims, **characterized in that** the sections of the conductor which are situated in the slots are stamped in slot form.

17. Method according to one of the preceding claims, **characterized in that** the stator winding (100) is inserted into a flat core.

18. Method according to one of the preceding claims, **characterized in that** the lengths of the strand sections which are situated outside the stator core vary, in particular in order to generate a constant winding head height.

19. Method according to one of the preceding claims, **characterized in that** one layer of the strand sections which are layered in a slot clearly projects beyond the other layers for the purpose of fulfilling a cooling function, wherein this layer is inclined, in particular, in relation to the inside diameter of the stator.

20. Method according to one of the preceding claims, **characterized in that** one or more offsets are provided in the region of the winding head at the reversal points or next to the reversal points.

## Revendications

1. Procédé de formation d'un bobinage de stator (100) pour le stator d'une machine électrique, en particulier pour un véhicule automobile,
le ou les barreaux (102) du bobinage de stator (100) étant disposés dans un plan et des parties du barreau (A, B, C) étant cintrées les unes par rapport aux autres le long d'au moins une ligne de pliage (108) de telle sorte que l'on obtienne un bobinage en boucle,
le barreau (102) étant agencé en forme de serpentin dans la première direction (X) étant et en forme d'ondulation dans une deuxième direction (Y).

2. Procédé selon la revendication 1, **caractérisé en ce qu'**à l'état replié, au moins une première partie du barreau vient se placer parallèlement à une deuxième partie du barreau.

3. Procédé selon l'une des revendications précédentes, **caractérisé en ce que** dans une première direction (X) du plan, une partie du barreau (102) est agencée en correspondance au nombre de rainures d'une position ultérieure de rainure de la partie du barreau et **en ce que** dans une deuxième direction (Y) du plan, perpendiculaire à la première direction, la partie de barreau est agencée en correspondance à la position radiale de la partie du barreau à l'intérieur d'une rainure.

4. Procédé selon l'une des revendications précédentes, **caractérisé en ce que** des parties (A, B, C) qui permettent d'associer les parties de barreau à au moins une tête d'enroulement ou à un paquet de stator sont définies à l'intérieur du plan.

5. Procédé selon l'une des revendications précédentes, **caractérisé en ce que** l'évolution d'une partie de barreau est oblique par rapport à la première et à la deuxième direction (X, Y) dans les parties (A, B) qui peuvent être associées à une tête d'enroulement.

6. Procédé selon l'une des revendications précédentes, **caractérisé en ce que** l'évolution d'une partie de barreau est parallèle à la deuxième direction (Y) dans les parties (C) qui peuvent être associées à un paquet de stator.

7. Procédé selon l'une des revendications précédentes, **caractérisé en ce que** pour réaliser le bobinage de stator (100), plusieurs barreaux sont utilisés et guidés essentiellement en parallèle.

8. Procédé selon l'une des revendications précédentes, **caractérisé en ce que** le positionnement des barreaux est réalisé sous la forme d'un enroulement réparti.

9. Procédé selon l'une des revendications précédentes, **caractérisé en ce qu'**une extrémité d'une partie de barreau qui peut être associée à une tête d'enroulement conduit dans une autre position radiale dans une rainure que l'autre extrémité de cette partie de barreau.

10. Procédé selon l'une des revendications précédentes, **caractérisé en ce que** le nombre des parties de barreau qui croisent la ligne de pliage (108) est égal au nombre des rainures du paquet de stator associé.

11. Procédé selon l'une des revendications précédentes, **caractérisé en ce que** la position des parties de barreau à l'intérieur des rainures se modifie progressivement dans la direction radiale pour le bobinage de stator (100) replié, la direction de la progression radiale étant inversée en au moins un point d'inversion (110).

12. Procédé selon l'une des revendications précédentes, **caractérisé en ce qu'**un fil continu est utilisé pour le barreau (102).

13. Procédé selon l'une des revendications précédentes, **caractérisé en ce qu'**un fil rectangulaire est utilisé pour le barreau (102).

14. Procédé selon l'une des revendications précédentes, **caractérisé en ce que** le diamètre du conducteur qui forme le barreau (102) correspond essentiellement à la largeur des rainures du paquet de stator ou est supérieur à la largeur de la rainure.

15. Procédé selon l'une des revendications précédentes, **caractérisé en ce que** la forme du conducteur à l'état plat ou à l'état replié est modifiée essentiellement par compression.

16. Procédé selon l'une des revendications précédentes, **caractérisé en ce que** les parties du conducteur situées dans les rainures sont comprimées dans la forme de la rainure.

17. Procédé selon l'une des revendications précédentes, **caractérisé en ce que** le bobinage de stator (100) est inséré dans un paquet plat.

18. Procédé selon l'une des revendications précédentes, **caractérisé en ce que** la longueur des parties de barreau situées à l'extérieur du paquet de stator varie, en particulier pour obtenir une hauteur constante de la tête d'enroulement.

19. Procédé selon l'une des revendications précédentes, **caractérisé en ce qu'**une couche de parties de barreau empilées dans une rainure déborde nettement au-dessus des autres couches en vue de remplir une fonction de refroidissement, cette couche étant en particulier inclinée en direction du diamètre intérieur du stator.

20. Procédé selon l'une des revendications précédentes, **caractérisé en ce qu'**un ou plusieurs coudes sont ménagés au niveau de la tête d'enroulement aux points d'inversion ou à côté des points d'inversion.
